(19) Europäisches Patentamt
European Patent Office
Office européen des brevets

(11) Numéro de publication: **0 145 547 B1**

# (12) FASCICULE DE BREVET EUROPEEN

(45) Date de publication du fascicule du brevet: **01.06.88**

(51) Int. Cl.[4]: **G 01 L 5/10**

(21) Numéro de dépôt: **84402254.1**

(22) Date de dépôt: **09.11.84**

## (54) Dispositif de mesure de la tension longitudinale d'une bande de matériau.

(30) Priorité: **18.11.83 FR 8318435**

(43) Date de publication de la demande: **19.06.85 Bulletin 85/25**

(45) Mention de la délivrance du brevet: **01.06.88 Bulletin 88/22**

(84) Etats contractants désignés: **CH DE GB IT LI SE**

(56) Documents cités:
**EP - A - 0 112 781**
**DE - A - 2 848 638**
**FR - A - 2 357 876**
**FR - A - 2 359 394**
**FR - A - 2 389 879**
**US - A - 4 245 869**

(73) Titulaire: **SOCIETE EUROPEENNE DE PROPULSION (S.E.P.) Société Anonyme dite:, 3, avenue du Général de Gaulle, F-92800 Puteaux (FR)**

(72) Inventeur: **Habermann, Helmut, 63 rue de Bizy, F-27200 Vernon France (FR)**
Inventeur: **Brunet, Maurice, Le bout aux Roussel Ste Colombe, F-27950 St Marcel (FR)**

(74) Mandataire: **Thevenet, Jean-Bruno et al, Cabinet BEAU DE LOMENIE 55 rue d'Amsterdam, F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).



ACTORUM AG

## Description

La présente invention a pour objet un dispositif de mesure de la tension longitudinale d'une bande de matériau à la sortie d'un laminoir, comprenant un rouleau mesureur sur lequel la bande s'appuie et défile, et des détecteurs d'effort associés au rouleau mesureur pour délivrer un signal fonction de l'effort de traction exercé sur la bande de matériau en appui sur ledit rouleau mesureur.

Il est particulièrement important de connaître la tension longitudinale 'un matériau au cours de son étirement, par exemple dans le cas d'une bande métallique sortant d'un laminoir. En effet, s'il existe des différences de traction dans le sens de la largeur de la bande en cours de laminage, il peut en résulter l'apparition de défauts de planéité sur la bande, particulièrement si celle-ci est large et mince. Par suite, il est nécessaire de mesurer la distribution des efforts de traction sur la largeur d'une bande de matériau en cours d'étirement afin de pouvoir agir éventuellement sur les paramètres du laminoir pour corriger les écarts de tension trop importants susceptibles d'affecter la planéité de la bande et de conduire à une détérioration de celle-ci.

Dans les dispositifs connus par exemple par les documents de brevet FR-A-2 357 876, FR-A-2 359 394 et FR-A-2 389 879, on utilise généralement un rouleau mesureur disposé transversalement par rapport au sens de défilement de la bande laminée et composé d'une suite de disques coaxiaux alignés sur un même arbre et sur lesquels repose la bande. Chaque disque est monté sur des paliers à billes ou à air et est équipé de détecteurs d'efforts constitués généralement par des transducteurs piézoélectriques qui délivrent des signaux fonction de l'effort de traction exercé sur la partie de bande de matériau en appui sur le disque correspondant.

A ce sujet, on connait aussi des paliers magnétiques passifs (DE-A-2 848 638); et dans la demande EP-A2-112781 (publiée le 4 juillet 1984) est décrit un tel dispositif avec des paliers magnétiques actifs.

La présente invention vise à réaliser un dispositif de mesure de la tension longitudinale d' une bande de matériau qui soit à la fois plus précis et plus robuste que les dispositifs connus, et soit adapté à des conditions de fonctionnement difficiles, par exemple à un environnement à haute température et à des vitesses élevées de défilement de bande.

Ces buts sont atteints grâce à un dispositif de mesure tel que défini dans la revendication 1.

Des modes particuliers de réalisation de l'invention sont décrits dans les revendications dépendantes.

D'autres caractéristiques et avantages de l'invention ressortiront de la description qui fait suite de modes particuliers de réalisation, en référence au dessin annexé, sur lequel:

– la figure 1 est une vue schématique en perspective d'une installation dans laquelle peut être installé un dispositif de mesure selon l'invention,

– la figure 2 est une vue schématique en coupe axiale d'un rouleau individuel de mesure selon l'invention,

– la figure 3 est une vue schématique en coupe radiale selon la ligne III–III de la figure 2, d'un ensemble de détection de la position radiale du rouleau de la figure 2,

– la figure 4 est une vue schématique en coupe radiale selon la ligne IV–IV de la figure 2, d'un palier magnétique radial supportant le rouleau de la figure 2,

– les figures 5 et 6 représentent deux variantes d'un ensemble de mesure de l'entrefer moyen du palier magnétique radial supportant le rouleau de la figure 2, et

– la figure 7 est une vue schématique du circuit électronique du dispositif de mesure selon l'invention.

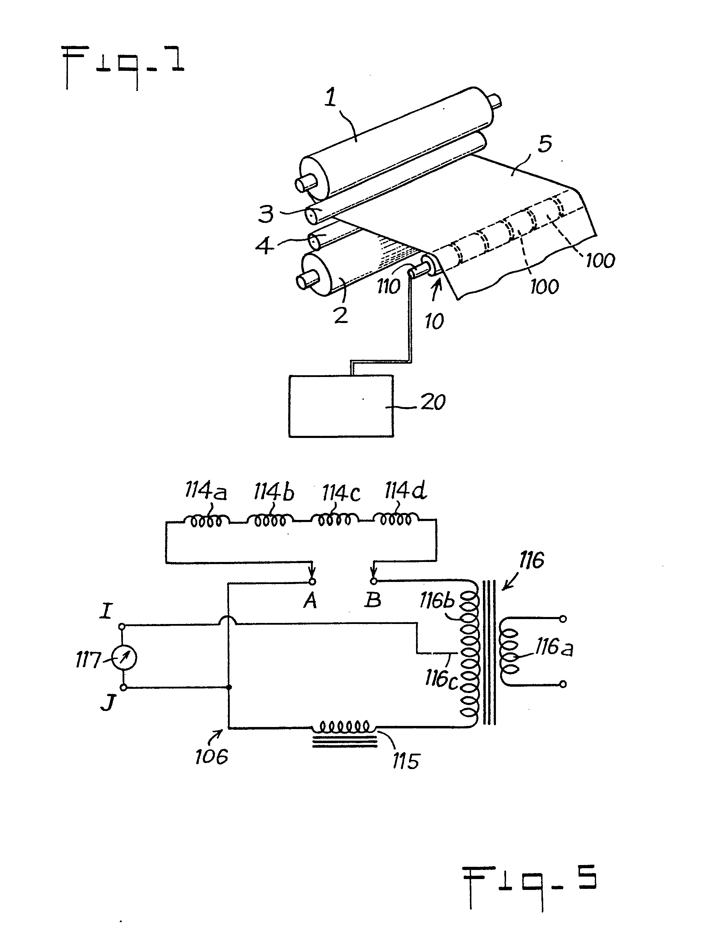

On voit sur la figure 1 une cage de sortie d'un laminoir comprenant une paire de rouleaux d'appui 1, 2 et une paire de rouleaux de travail 3, 4 entre lesquels passe une bande de tôle 5, Le contrôle de planéité de la bande de tôle 5 est réalisé par mesure en continu des forces de traction longitudinale exercées sur cette bande, en différents points le long d'une ligne transversale à la bande de matière 5. La mesure des forces de traction longitudinale est effectuée à l'aide d'un rouleau mesureur 10 disposé parallèlement aux rouleaux 1 à 4 de la cage de laminoir, en aval de ceux-ci, et sur lequel la bande 5 s'appuie et défile.

Le rouleau mesureur 10 est constitué de plusieurs rouleaux individuels juxtaposés 100 coaxiaux montés à l'aide de paliers magnétiques actifs radiaux 102 sur un arbre fixe 110. Des détecteurs 101 de la position radiale des rouleaux individuels 100 sont associés aux paliers magnétiques 102 et placés au voisinage immédiat de ceux-ci. Les signaux délivrés par les enroulements des paliers magnétiques radiaux et par les détecteurs de position 101 sont traités par des circuits électroniques 20 pour fournir des informations de sortie représentant la valeur des efforts de traction longitudinale exercés sur la bande 5 au niveau de chaque rouleau individuel 100.

La variation de contraintes dans le métal de la bande 5 se traduit par une variation de la force d'appui sur chaque rouleau individuel 100, et la valeur de cette force d'appui est déterminée à partir de la mesure du courant circulant dans les enroulements d'excitation des paliers magnétiques 102 supportant chaque rouleau individuel 100.

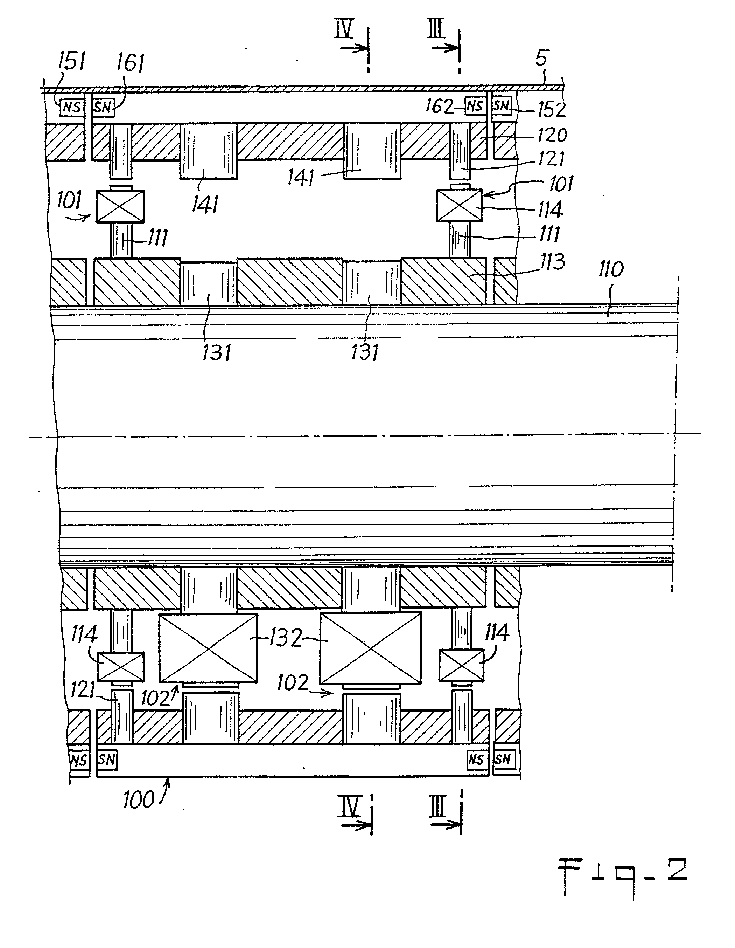

L'ensemble de mesure constitué par un rouleau individuel 100 sera décrit de façon détaillée en référence aux figures 2 à 7.

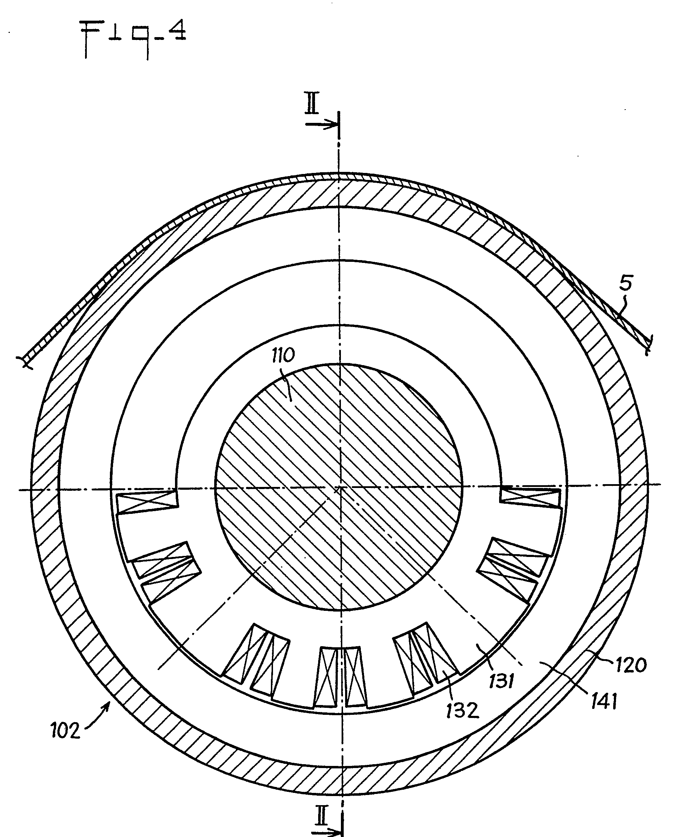

Sur les figures 2 et 4, on voit qu'un palier magnétique radial 102 comprend un stator 131 composé d'un empilement de tôles monté dans un support 113 solidaire de l'arbre central 110, et d'enroulements 132 disposés dans des encoches du stator 131, ainsi qu'un rotor feuilleté 141 monté dans la jante 120 du rouleau 100 sur laquelle s'appuie la bande de matériau 5. La structure d'ensemble du palier magnétique 102 est classique, mais le palier comprend un stator 131 dont les enroulements 132 peuvent n'être situés que dans la moitié inférieure du rouleau 100 opposée à la bande 5 et la valeur du courant circulant dans les enroulements d'excitation 132 du stator sert à déterminer la valeur de l'effort exercé par la bande 5 sur le rouleau 100 supporté par un ou deux paliers magnétiques 102. On sait en effet que la force exercée au niveau d'une suspension par palier magnétique est proportionnelle au carré de l'intensité du courant cirulant dans les enroulements d'excitation d'un palier magnétique. La mesure de l'intensité I dudit courant permet ainsi de déterminer la valeur de la force d'appui de la bande 5 sur un rouleau individuel 100 et par là-même la valeur de l'effort de traction exercé sur la bande 5 au niveau du rouleau individuel 100 considéré, dans la mesure où la valeur de l'entrefer du palier magnétique 102 est elle-même connue.

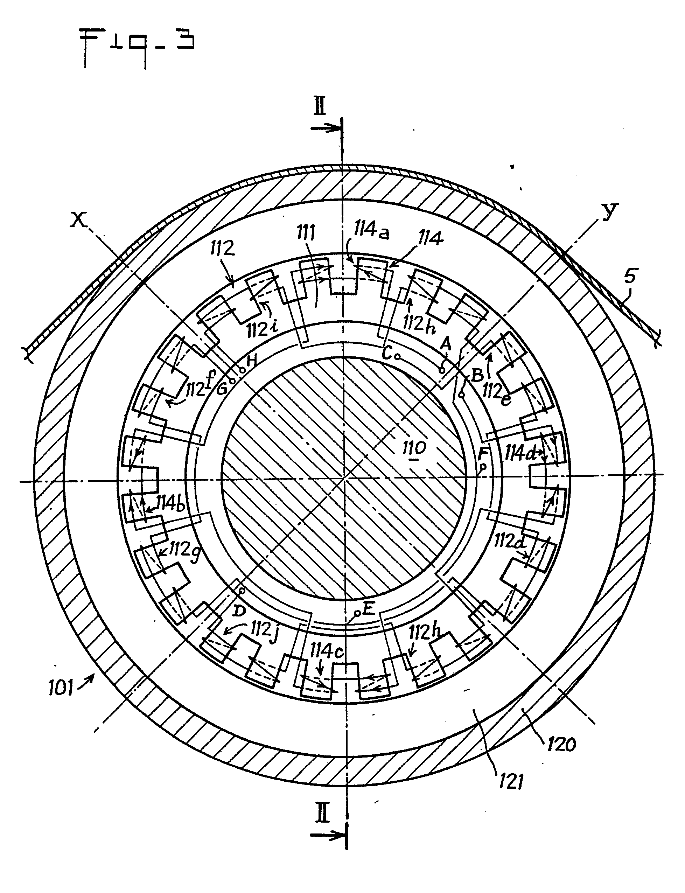

Un détecteur 101 de la position radiale du rotor 120 d'un rouleau 100 est associé à chaque palier magnétique 102. Le détecteur 101 représenté sur les figures 2 et 3 est de type électromagnétique et comporte un stator en tôles feuilletées 111, fixé sur le support 113 solidaire de l'arbre fixe central 110, et muni d'encoches dans lesquelles sont disposés des bobinages 112 et 114. Le stator 111 coopère avec un rotor 121 solidaire de la jante 120 du rouleau 100 et constitué par un empilement de tôles feuilletées annulaires dont l'extrémité interne fait face aux pôles du stator 111 en ménageant un entrefer qui est l'image de l'entrefer du palier magnétique 102 associé, compte tenu de la localisation du détecteur 101 au voisinage immédiat du palier 102.

Le détecteur électromagnétique inductif 101 comprend une première série de bobinages 112 composée par exemple d'un ensemble d'enroulements 112d à 112k agencés de la manière décrite dans le brevet français 2214890, les bobinages 112 montés en pont étant destinés à permettre l'élaboration d'un signal représentatif des variations $E_x$ de l'entrefer du détecteur 101 et par suite du palier magnétique 102. Les signaux issus des bobinages 112 et représentant les variations $E_x$ d'entrefer sont appliqués par la ligne 108 (figure 7) d'une part à un circuit 107 de calcul assurant la détermination de la valeur de la force F de traction exercée sur la bande 5 au niveau du rouleau 100 considéré, et d'autre part à un comparateur 103 qui assure la comparaison avec un signal de référence $E_r$. Un circuit 104 de traitement du signal auquel est appliqué le signal d'erreur issu du comparateur 103 assure un asservissement de la valeur de l'intensité du courant appliqué aux enroulements d'excitation 132 du palier magnétique 102 afin de maintenir le rotor 120 du rouleau 100 dans une position stable prédéterminée telle que l'entrefer du palier 102 présente un minimum de variations. Le signal issu du circuit 104 est amplifié par l'amplificateur 105 et alimente les enroulements 132 du palier 102. Le signal issu du circuit de traitement 104, qui est proportionnel à l'intensité I du courant cirulant dans les enroulements 132 est également appliqué au circuit 107 d'élaboration du signal représentant l'effort exercé sur le rouleau 100.

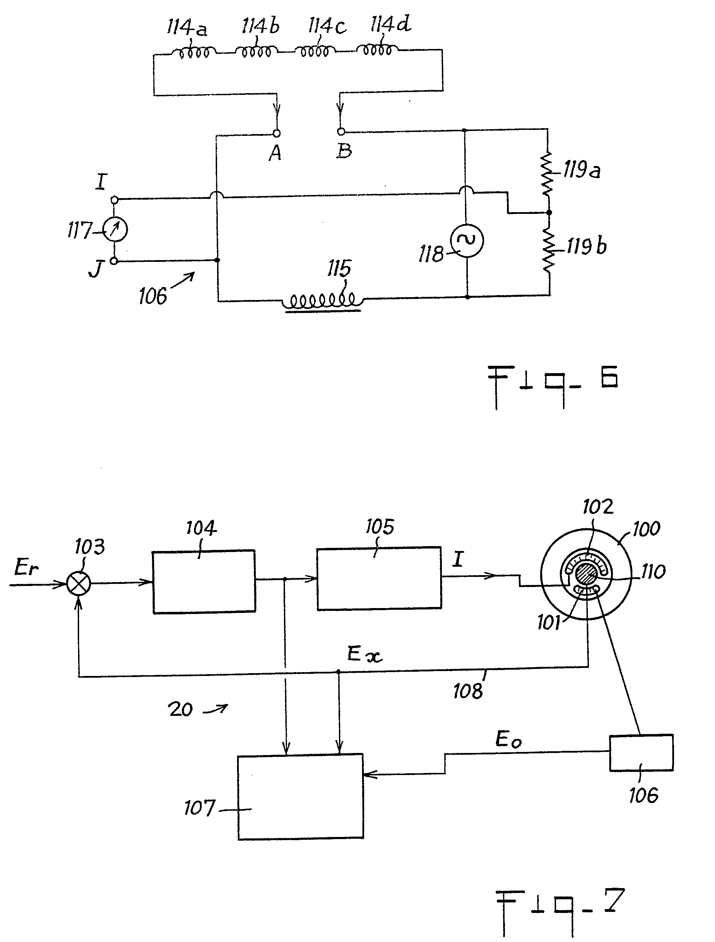

Le détecteur électronique 101 comprend en outre une deuxième série de bobinages 114 comprenant par exemple quatre enroulements 114a, 114b, 114c et 114d connectés en série de la manière représentée sur la figure 3 et associés à une bobine de référence 115 dans un circuit 106 correspondant par exemple à l'un des schémas représentés sur les figures 5 et 6, pour permettre la production d'un signal représentatif de la valeur de l'entrefer moyen $E_o$ du palier magnétique 102. Le signal $E_o$ issu du circuit 106 est également appliqué au circuit de calcul 107 pour permettre l'élaboration d'une information représentant la valeur F de l'effort exercé par la bande 5 sur le rouleau individuel 100 considéré, selon la formule:

$$F=K(I^2/(E_o+E_x+a)^2) \quad (1)$$

où I représente l'intensité du courant d'excitation appliqué aux enroulements 132 du palier magnétique 102, $E_x$ représente les variations d'entrefer du palier magnétique 102, mesurées par les bobinages 112 du détecteur de position 101, $E_o$ représente la valeur de l'entrefer moyen du palier 102, mesurée par les bobinages 114 du détecteur de position 101, a est un coefficient de correction tenant compte des fuites magnétiques et des variations de la perméabilité M du stator 131 en fonction de l' induction magnétique et de la dilatation du rotor 120 portant le feuilletage 141, et K est un coefficient de proportionnalité.

On notera que l'entrefer différentiel $E_x$ est maintenu à une valeur proche de zéro grâce à l'asservissement 103, 104, 105 qui modifie la valeur du courant I de manière à maintenir le rotor 120 à une position prédéterminée par rapport au stator fixé sur l'arbre 110. L'entrefer moyen $E_o$ peut lui-même être défini avec précision grâce à la comparaison effectuée dans le circuit 106 avec au moins une bobine 115 à entrefer fixe prédéterminé, et soumise aux mêmes conditions de température que les bobinages 114.

La mesure de l'entrefer moyen $E_o$ est importante car, du fait de l'échauffement créé par le frottement de la bande métallique 5 sur le rotor 120 du rouleau 100, le rotor 120 présente une dilatation différentielle non négligeable par rapport au stator, ce qui conduit à des modifications de la valeur moyenne de l'entrefer dont il faut tenir compte pour réaliser une mesure de précision.

Le coefficient de correction a tient compte du fait que, quelle que soit la qualité des tôles ferromagnétiques utilisées pour réaliser les armatures du palier 102 et du détecteur 101, il se produit des pertes dans le fer et il existe des fuites à travers l'entrefer, ces pertes et ces fuites étant fonction de la valeur de la perméabilité magnétique qui varie avec l'induction magnétique et de la valeur de l'entrefer moyen $E_o$ (et donc de la dilatation du rotor 120 par rapport au stator). La détermination du coefficient a en fonction de l'induction magnétique et de la valeur de l'entrefer moyen $E_o$ est réalisée par étalonnage et permet de remédier aux variations de sensibilité des différents éléments de capteur utilisés.

Comme on peut le voir sur la figure 5, les enroulements 114a à 114d sont connectés par la borne B au secondaire 116b d'un transformateur 116 dont le primaire 116a est alimenté en courant alternatif. Une bobine de référence 115 à entrefer fixe prédéterminé est également placée en série avec l'enroulement secondaire 116b et se trouve connectée entre une extrémité de l'enroulement secondaire 116b et la borne A reliée aux enroulements 114a à 114d. Un signal de comparaison représentatif de l'entrefer moyen $E_o$ du détecteur 101, et par là-même du palier 102, est engendré entre les bornes I et J c'est-à-dire entre le point milieu 116c du secondaire 116b du transformateur 116 et la borne A commune aux enroulements 114a à 114d et à l'enroulement 115. L'intensité mesurée par un appareil de mesure 117 entre les bornes I et J constitue ainsi un signal représentatif de la valeur de l'entrefer moyen $E_o$.

Selon la variante de la figure 6, le transformateur 116 est remplacé par un pont de résistances 119a, 119b alimenté directement par une source d'alimentation en courant alternatif porteur. Dans ce cas, la source 118 est connectée entre la borne B et l'extrémité de la borne de référence 115 non reliée à la borne A. La borne I est connectée au point commun entre les résistances 119a et 119b et les autres extrémités des résistances 119a, 119b sont reliées respectivement aux deux bornes de la source de tension 118. Une information représentative de l'entrefer moyen $E_o$ est constituée par l'intensité du courant mesurée par un appareil de mesure 117 de la même manière que dans le cas de la figure 6.

Le circuit de calcul 107 (figure 7) auquel sont appliqués des signaux représentant les grandeurs I, $E_o$, et $E_x$ susmentionnées et qui comprend des mémoires dans lesquelles sont enregistrées les différentes valeurs du coefficient a en fonction de l'intensité I (et donc de l' induction magnétique B) et de l'entrefer moyen $E_o$, permet de déterminer la valeur de la force de traction F à laquelle est soumise la tôle 5 au niveau d'un rouleau individuel 100, à partir de la formule (1) précitée. Pour que les mesures effectuées ne soient pas entachées d'erreur, il convient toutefois de régler l'asservissement du palier 102 de telle manière que, compte tenu des efforts exercés par la bande de matière 5, l'intensité I du courant mesuré circulant dans les enroulements d'excitation du palier 102 ne provoque pas une saturation de champ magnétique.

Afin de permettre la mesure des efforts exercés dans le sens longitudinal de la bande de matériau 5, en différents points de la bande répartis transversalement par rapport au sens de défilement de la bande, le rouleau mesureur 10 est constitué de plusieurs rouleaux individuels 100 juxtaposés. Chaque rouleau individuel 100 peut être supporté par un ou deux paliers radiaux 102 équipés de détecteurs 101 de position radiale. Afin d'éviter que les différents rouleaux individuels 100 laissent des marques sur la bande de matière 5 qui repose sur eux, deux rouleaux individuels adjacents 100 peuvent être prévus pour être en contact l'un avec l'autre avec une force axiale faible. Selon un autre mode de réalisation, des bagues de faible largeur en une matière telle que le polytétrafluoroéthylène sont rapportées sur les extrémités des rouleaux individuels 100, à la jointure entre deux rouleaux individuels adjacents afin d'éviter la formation d'arêtes métalliques vives aux bords des rouleaux 100 qui seraient susceptibles de laisser des traces sur la bande de matière 5. Il est également possible d'interposer des bagues indépendantes formant entretoises, en polytétrafluoroéthylène, entre deux rouleaux individuels adjacents. Comme on le voit sur la figure 2, des rouleaux individuels adjacents 100 peuvent être maintenus à une faible distance l'un de l'autre par des paliers axiaux passifs à répulsion formés d'aimants permanents 151, 161; 152, 162 montés dans les rotors 120 des rouleaux individuels 100.

La largeur totale des bandes de matériau 5 dans lesquelles il est possible de localiser les contraintes dues aux efforts de traction longitudinale peut être de l'ordre de 1500 à 2000mm. Dans le cas par exemple d'une largeur totale de 1800mm il peut être utilisé dix huit rouleaux individuels présentant une largeur de 100mm et montés chacun sur deux paliers magnétiques actifs radiaux de manière à fournir des mesures d'effort en trente six points répartis sur la largeur de la bande.

Afin de bénéficier d'une grande précision, malgré des irrégularités dans la fabrication initiale des rouleaux individuels de mesure 100, il est possible de réaliser, après montage de ceux-ci sur l'arbre central fixe 110, une rectification de la surface extérieure des rotors 120 des rouleaux 100, sur laquelle porte la bande de matériau 5. Ceci garantit un entraînement régulier de tous les rouleaux individuels 100 par la bande 5, celle-ci s'appuyant uniformément sur l'ensemble des rouleaux juxtaposés 100.

On notera que l'utilisation derouleaux 100 montés sur paliers magnétiques avec stator interne autorise des vitesses de rotation élevées se traduisant par des vitesses linéaires importantes à la périphérie des rotors 120. Le dispositif de mesure selon l'invention peut ainsi facilement s'adapter à des vitesses linéaires de l'ordre de 50 à 100m/s.

## Revendications

1. Dispositif de mesure de la tension longitudinale d'une bande de matériau à la sortie d'un laminoir, comprenant un rouleau mesureur (10) sur lequel la bande (5) s'appuie et défile, et des détecteurs d'effort associés au rouleau mesureur (10) pour délivrer un signal fonction de l'effort de traction exercé sur la bande de matériau (5) en appui sur ledit rouleau mesureur (10), le rouleau mesureur (10) comprenant au moins un rouleau (100) monté sur des paliers magnétiques actifs radiaux (102) qui constituent lesdits détecteurs d'effort, le dispositif de mesure comprenant des moyens (104, 107) pour mesurer le courant dans les enroulements (132) des paliers magnétiques actifs, des moyens (101) de détection de la position radiale des rouleaux (100) supportés par lesdits paliers, et des moyens (106, 103) pour mesurer l'entrefer des paliers magnétiques (102) et maintenir celui-ci sensiblement constant, ce dispositif comprenant, associées à chaque palier radial actif (102), une première série de détecteurs électromagnétiques de la position radiale du rouleau individuel correspondant (112) pour asservir le palier radial actif (102) et maintenir ladite position radiale sensiblement constante, et une deuxième série (114) de détecteurs électromagnétiques de position radiale, associés à au moins une bobine de référence (115) présentant un entrefer prédéterminé, pour déterminer la valeur $E_o$ de l'entrefer moyen du palier magnétique (102).

2. Dispositif selon la revendication 1, caractérisé en ce que pour différentes valeurs de l'entrefer moyen $E_o$, qui correspondent à différentes températures de service, une correction est effectuée à partir d'un étalonnage préalable consistant à déterminer pour différentes charges pédéterminées le coefficient de correction a à ajouter à l'entrefer moyen pour déterminer la valeur de la charge F à partir de la formule

$$F=K(^2/(E_o+E_x+a)^2)$$

où I est l'intensité du courant appliqué au palier magnétique, $E_o$ est la valeur mesurée de l'entrefer moyen, $E_x$ est la valeur de l'entrefer différentiel mesuré par la première série de détecteurs (112) et maintenir à une valeur sensiblement nulle, a est le coefficient de correction tenant compte des fuites magnétiques et des variations de la perméabilité $\mu$ du stator de palier radial en fonction de l'induction magnétique et de la dilatation du rotor (120), et K est un coefficient de proportionalité.

3. Dispositif selon la revendication 1, ou la revendication 2, caractérisé en ce que le rouleau mesureur (10) comprend plusieurs rouleaux individuels coaxiaux (100) juxtaposés dans le sens transversal de la bande de matériau (5), montés chacun sur des paliers magnétiques actifs (102) et associés chacun à des moyens (104, 107) pour mesurer le courant des enroulements (132) des paliers magnétiques actifs (102) et à des moyens (101, 106, 103) pour mesurer l'entrefer des paliers magnétiques et maintenir celui-ci sensiblement constant.

4. Dispositif selon l'une quelconque des revendications 1 à 3, caractérisé en ce que chaque rouleau individuel (100) est supporté par deux paliers magnétiques actifs (102).

5. Dispositif selon la revendication 3, caractérisé en ce que deux rouleaux individuels adjacents (100) sont en contact avec une faible force axiale.

6. Dispositif selon la revendication 5, caractérisé en ce qu'une entretoise en polytetrafluoroéthylène est interposée entre deux rouleaux individuels adjacents (100).

7. Dispositif selon la revendication 3, caractérisé en ce que les différents rouleaux individuels juxtaposés (100) sont soumis à une rectification à leur partie supérieure, après montage, afin de permettre un entraînement homogène de l'ensemble des rouleaux individuels (100) par la bande de matériau (5).

8. Dispositif selon la revendication 3 ou 4, caractérisé en ce qu'il comprend entre quinze et vingt rouleaux individuels juxtaposés (100) supportés chacun par deux paliers magnétiques radiaux, chaque rouleau individuel présentant une longueur de l'ordre de 100mm.

9. Dispositif selon l'une quelconque des revendications 1 à 8, caractérisé en ce qu'un palier axial passif à répulsion (151, 161; 152, 162) à aimants permanents est associé à chaque palier radial (102) sur la face frontale correspondante du rouleau individuel considéré (100).

**Patentansprüche**

1. Vorrichtung zur Messung der Längsspannung eines Materialbands am Ausgang eines Walzwerks mit einer Messwalze (10), auf die sich das Band (5) stützt und über die es abläuft, und der Messwalze (10) zugeordneten und sich auf sie stützenden Spannungsdetektoren zur Abgabe eines der auf das Materialband (5) ausgeübten Zugspannung entsprechenden Signals, wobei die Messwalze (10) mindestens eine Walze (100) umfasst, die auf den die Spannungsdetektoren bildenden, aktiven Magnetradiallagern (102) angebracht ist, und die Messvorrichtung umfasst:

Mittel (104, 107) zur Bestimmung des Stroms in den Wicklungen (132) der aktiven Magnetlager, Mittel (101) zur Bestimmung der Radialstellung der von den Lagern gestützten Walzen (100) und Mittel (106, 103) zur Bestimmung des Luftspalts der Magnetlager (102) und zu seiner im wesentlichen Konstanthaltung sowie jedem aktiven Radiallager (102) zugeordnet, eine Reihe von elektromagnetischen Detektoren der Radialstellung der entsprechenden Einzelwalze (112) zur Steuerung des aktiven Radiallagers (102) und im wesentlichen Konstanthaltung dieser Radialstellung und eine zweite Reihe (114) von elektromagnetischen Detektoren der Radialstellung, die mindestens einer Bezugsspule (115) mit vorbestimmtem Luftspalt zugeordnet sind, zur Bestimmung des Wertes $E_o$ des mittleren Luftspalts des Magnetlagers (102).

2. Vorrichtung nach Anspruch 1, dadurch gekennzeichnet, dass für verschiedene Werte $E_o$ des mittleren Luftspalts, die verschiedenen Betriebstemperaturen entsprechen, eine Korrektur anhand einer vorhergehenden Eichung durchgeführt wird, wobei für verschiedene vorbestimmte Belastungen der dem mittleren Luftspalt zuzufügende Korrekturkoeffizient a und der Wert der Belastung F anhand der Formel

$$F=K(I^2/(E_o+E_x+a)^2)$$

bestimmt wird, wobei bedeuten:

I die dem Magnetlager zugeführte Stromstärke ist, $E_o$ den gemessenen Wert des mittleren Luftspalts, $E_o$ den Wert des mit der ersten Detektorenreihe (112) bestimmten Differentialluftspalts, der auf praktisch Null gehalten wird, a den Korrekturkoeffizient, wobei die Magnetstreuung und Permeabilitätsänderungen $\mu$ des Radiallagerstators in Abhängigkeit von der magnetischen Induktion und der Dilatation des Rotors (120) berücksichtigt werden, und K einen Proportionalitätskoeffizient.

3. Vorrichtung nach Anspruch 1 oder 2, dadurch gekennzeichnet, dass die Messwalze (10) mehrere koaxiale Einzelwalzen (100) aufweist, die quer zum Materialband (5) nebeneinander angeordnet und je auf aktiven Magnetlagern (102) angebracht sind und Mitteln (104, 107) zur Bestimmung des Stroms in den Wicklungen (132) der aktiven Magnetlager (102) und Mitteln (101, 106, 103) zur Bestimmung des Luftspalts der Magnetlager und seiner im wesentlichen Konstanthaltung zugeordnet sind.

4. Vorrichtung nach einem der Ansprüche 1 bis 3, dadurch gekennzeichnet, dass jede Einzelwalze (100) von zwei aktiven Magnetlagern (102) getragen wird.

5. Vorrichtung nach Anspruch 3, dadurch gekennzeichnet, dass zwei benachbarte Einzelwalzen (100) mit einer schwachen Axialkraft in Berührung sind.

6. Vorrichtung nach Anspruch 5, dadurch gekennzeichnet, dass zwischen zwei benachbarten Einzelwalzen (100) ein Steg aus Polytetrafluorethylen angebracht ist.

7. Vorrichtung nach Anspruch 3, dadurch gekennzeichnet, dass die einzelnen nebeneinander angeordneten Einzelwalzen (100) nach der Montage in ihrem oberen Teil korrigiert werden, um einen gleichmässigen Antrieb aller Einzelwalzen (100) durch das Materialband (5) zu gewährleisten.

8. Vorrichtung nach Anspruch 3 oder 4, dadurch gekennzeichnet, dass sie von 15 bis 20 nebeneinander angeordneten Einzelwalzen (100) umfasst, die je von zwei Magnetradiallagern getragen werden, wobei jede einzelne Walze eine Länge von etwa 100 mm hat.

9. Vorrichtung nach einem der Ansprüche 1 bis 8, dadurch gekennzeichnet, dass ein passives Dauermagnet-Rückstossaxiallager (151, 161; 152, 162) jedem Radiallager (102) auf der entsprechenden Stirnseite der jeweiligen Einzelwalze (100) zugeordnet ist.

## Claims

1. Device for measuring the longitudinal tension in a strip of material leaving a rolling mill, comprising a measuring roll (10) over which the strip (5) bearingly runs and load sensors associated with said measuring roll (10) to supply a signal which is a function of the tensile stress in the strip of material (5) bearing on said measuring roll (10), said measuring roll (10) comprising at least one roll (100) mounted on active radial magnetic bearings (102) which form said load sensors, the measuring device comprising means (104, 107) for measuring the current in the windings (132) of the active magnetic bearings, means (101) for detecting the radial position of the rolls (100) supported by said bearings, and means (106, 103) for measuring the air gap in the magnetic bearings (102) and keeping said air gap substantially constant, said device comprising, associated to each active radial bearing (102), a first series of electromagnetic detectors for detecting the radial position of the corresponding individual roller (112) in order to control the active radial bearing (102) and to keep said radial position substantially constant, and a second series (114) of electromagnetic detectors of radial position, associated to at least one reference bobbin (115) with a predetermined air gap, in order to determine the value $E_o$ of the mean air gap of the magnetic bearing (102).

2. Device according to claim 1, characterized in that a correction is effected for different values of the mean air gap $E_o$, said values corresponding to different operating temperatures, said corrections being based upon a prior calibration consisting in determining the correction coefficient a which must be applied to the mean air gap for each of several different loads so as to determine the value of the load F according to the equation

$$F=K(I^2/(E_o+E_x+a)^2)$$

where I is the intensity of the current applied to the magnetic bearing, $E_o$ the measured value of the mean air gap, $E_x$ the value of the differential air gap measured by the first series of detectors (112) and held to a substantially null value, a the correction coefficient taking into account magnetic leakages and changes in the permeability $\mu$ of the radial bearing stator according to the magnetic induction and the expansion of the rotor (120), and K a meter constant.

3. Device according to claim 1, or claim 2, characterized in that said measuring roll (10) consists of a plurality of individual rolls (100) coaxially aligned perpendicularly to the strip of material (5), each of said individual rolls being mounted on active magnetic bearings (102) and being associated with means (104, 107) for measuring the current in the windings (132) of said active magnetic bearings (102) and with means (101, 106, 103) for measuring the air gap of said magnetic bearings and keeping the latter substantially constant.

4. Device according to any one of claims 1 to 3, characterized in that each individual roll (100) is supported by two active magnetic bearings (102).

5. Device according to claim 3, characterized in that two adjacent individual rolls (100) are in end-to-end contact with a slight axial pressure.

6. Device according to claim 5, characterized in that a polytetrafluoroethylene spacer is inserted between two adjacent individual rolls (100).

7. Device according to claim 3, characterized in that the different juxtaposed individual rolls (100) are subjected to a rectification on their upper part, after mounting, so as to enable a uniform driving of the full alignment of individual rolls (100) by the strip of material (5).

8. Device according to claim 3 or 4, characterized in that it comprises between fifteen and twenty juxtaposed individual rolls (100) each one being supported by two radial magnetic bearings, each of said individual rolls being of a length on the order of 100 mm.

9. Device according to any one of claims 1 to 8, characterized in that a repulsion-type passive axial bearing (151, 161; 152, 162) consisting of permanent magnets is associated to each radial bearing (102) on the corresponding front face of the given individual roll (100).

Fig-1

1
5
3
4
100
100
110
2
10
20
114a
114b
114c
114d
116
A
B
116b
I
116a
117
116c
J
106
115

Fig-5

Fig. 2

3/5

Fig-3

Fig-4
II
5
110
120
131
132
141
102
II

114a
114b
114c
114d
A
B
I
119a
117
118
119b
J
115
106

Fig. 6

102
100
104
105
103
Er
I
110
101
Ex
108
20
Eo
107
106

Fig. 7